# EUROPÄISCHE PATENTANMELDUNG

(11) **EP 3 406 944 A1**
(43) Veröffentlichungstag der Anmeldung: **28.11.2018**
(21) Anmeldenummer: 18177468.8
(22) Anmeldetag: 22.05.2015
(51) Int. Cl.: F16H 57/04

(54) **STIRNRADGETRIEBE**

(30) Priorität: 23.05.2014 DE 102014209922
(62) Teilanmeldung aus: 15723969.0
(71) Anmelder: Voith Patent GmbH, 89522 Heidenheim (DE)
(72) Erfinder: Zemella, Philipp, 38678 Clausthal-Zellerfeld (DE); Dr. Kämmerer, Herr Steffen, 87509 Immenstadt (DE)

(57) **Zusammenfassung**

Die Erfindung betrifft ein Stirnradgetriebe mit wenigstens zwei verzahnten Stirnrädern (1, 2), deren Verzahnungen in einem kämmenden Eingriff miteinander stehen und die jeweils über einer Drehachse (3, 4) drehbar sind;
- mit einer Hüllwand (5), welche die beide Stirnräder in Umfangsrichtung und in Richtung der Drehachsen umschließt; wobei
- die Hüllwand eine Innenkontur aufweist, welche den Außendurchmessern der Stirnräder derart angepasst ist, dass sich zwischen der Hüllwand und den Stirnrädern zwei ineinander übergehende Ringspalte (6, 7) ergeben, wobei je ein Ringspalt zumindest im Wesentlichen konzentrisch zu je einer Drehachse angeordnet ist, wobei
- die Hüllwand die beiden Stirnräder in Umfangsrichtung nur über einen Teil von deren Umfang umschließt, sodass ein Teil des äußeren Umfangs der beiden Stirnräder oder zumindest eines der beiden Stirnräder nach außen aus der Hüllwand herausragt.

Das erfindungsgemäße Stirnradgetriebe ist dadurch gekennzeichnet, dass der aus der Hüllwand herausragende Teil beider Stirnräder oder des einen Stirnrads auf der Unterseite der Stirnräder positioniert ist.

## Beschreibung

Die vorliegende Erfindung betrifft ein Stirnradgetriebe mit wenigstens zwei verzahnten Stirnrädern, im Einzelnen gemäß dem Oberbergriff der unabhängigen Ansprüche.

Stirnradgetriebe der gattungsgemäßen Art sind beispielsweise aus der WO 2012/028231 A1 bekannt. Solche Stirnradgetriebe sind beispielsweise als hochtourige Getriebe, wie Turbogetriebe, ausgeführt.

Besonders bei solchen hochtourigen Getrieben wie Turbogetrieben entstehen aufgrund der Verwirbelung des Luft-Öl-Gemischs im Innenraum des Getriebegehäuses Verluste, die unerwünscht sind. Zur Verlustreduzierung sind verschiedene Maßnahmen bekannt. Eine Maßnahme sieht vor, den Innenraum des Getriebegehäuses mittels einer Vakuumpumpe zu besaugen, sodass der Druck im Innenraum niedriger als jener der Umgebung außerhalb des Getriebegehäuses ist.

Eine andere Maßnahme, die eine solche Besaugung des Getriebegehäuses vermeiden soll, ist in der eingangs genannten WO 2012/028231 A1 dargestellt, nämlich das Vorsehen einer eng anliegenden Hüllwand um die Stirnräder, welche die Stirnräder in Umfangsrichtung bis auf einen Einlassspalt und gegebenenfalls Auslassspalt, der außerhalb des äußeren Umfangs der Stirnräder positioniert ist, umschließt. Auch diese Kapselung der Stirnräder mit der Hüllwand wurde vorgesehen, um einen Unterdruck im Bereich des äußeren Durchmessers der Stirnräder beziehungsweise im Bereich von deren Verzahnungen zu erzeugen, der die Verluste reduziert.

Beide bekannten Maßnahmen basieren somit auf der Annahme, dass ein möglichst geringer Druck, das heißt ein möglichst starkes Vakuum im Bereich der umlaufenden Verzahnungen der Stirnräder erzeugt werden muss, um die Verlustleistungen zu reduzieren. Daher wurden entsprechend aufwändige Maßnahmen zur weitgehenden Abdichtung beziehungsweise vergleichsweise leistungsstarke und damit teure und energieintensive Vakuumpumpen vorgesehen, um das Vakuum möglichst zu optimieren. Diese Maßnahmen sind mit unerwünschten Kosten verbunden.

DE 198 60 353 C1 offenbart ein Stirnradgetriebe, bei welchem die Stirnräder von einem zusätzlichen Innengehäuse, das innerhalb eines Hauptgehäuses befestigt ist, umschlossen werden. Im Innenraum des Innengehäuses wird mittels einer Pumpe ein Teilvakuum erzeugt. Der Raum zwischen dem Innengehäuse und dem Hauptgehäuse steht unter Atmosphärendruck. Die Stirnräder ragen nicht nach außen aus dem Innengehäuse heraus, sondern werden mit Abstand von diesem umschlossen, sodass sich auch keine ineinander übergehende Ringspalte ergeben.

DE 10 2006 022 964 A1 beschreibt einen Fluidausgleichsbehälter und ein damit ausgestattetes Getriebe. Der Fluidausgleichsbehälter umschließt die Stirnräder seitlich über einen Teil ihres Umfangs.

DE 10 2007 041 318 A1 beschreibt ein Schaltgetriebe mit einer Zahnradpumpe, wobei die Zahnradpumpe eine Außenzahnradpumpe ist und zwei miteinander kämmende Zahnräder aufweist, von denen eines einem der Radsätze im Getriebe angehört. Zur Ausbildung eines Pumpspalts ist unterhalb der Zahnräder ein zusätzliches Gehäuse vorgesehen, das sich teilweise über den Umfang der Zahnräder erstreckt.

GB 292 540 A beschreibt mit hoher Drehzahl umlaufende Zahnräder in einem Gehäuse, denen eine besondere Führung zugeordnet ist, um die Schmierung der Zahnräder zu verbessern. Die Führung umschließt die Zahnräder teilweise und ist auf der Unterseite zumindest derart geschlossen, dass die Zahnräder nicht aus der Führung herausragen.

GB 1 426 352 A beschreibt eine Schmiereinrichtung für Zahnräder, bei welchem ebenfalls ein teilweise geöffnetes Innengehäuse vorgesehen ist, das die Zahnräder auf deren Unterseite und auf einer seitlichen Seite eng umschließt.

GB 458 379 A offenbart eine Luftpumpe, die in ein Getriebe integriert ist. Die Luftpumpe weist Führungsbögen auf, die die Zahnräder auf deren Stirnseiten einschließen.

US 2014/0054114 A1 offenbart eine Schmierölversorgung für ein Getriebe, bei welcher eine Abdeckung das Ritzel zweier Stirnräder vollständig umschließt und das andere Zahnrad der beiden Stirnräder über dem halben Umfang umschließt.

US 5 950 501 A zeigt ein Stirnradgetriebe, dessen Innengehäuse die Stirnräder mit einem gewissen Abstand umschließt und mittels einer Pumpe evakuiert oder mit einem Gas befüllt wird. Es sind keine ineinander übergehende Ringspalte vorgesehen und die Stirnräder ragen nicht aus dem Innengehäuse heraus.

US 2 645 305 A beschreibt eine Schmiereinrichtung für Stirnräder eines Getriebes mit einer seitlichen Abschirmung der Stinräder, die nur über einen kleinen Teil des äußeren Umfangs der Stirnräder ragt.

EP 2 535 618 A1 offenbart von Gehäusen umschlossene Stirnräder, die jedoch nicht aus den Gehäusen herausragen.

WO 2012/028231 A1 offenbart ein Zahnradgetriebe mit einer Hüllwand, die wenigstens eines von zwei miteinander zusammenarbeitenden Zahnrädern umschließt und den umschlossenen Innenraum partiell oder vollkommen gegen die Umgebung absperrt. Die Zahnräder ragen nicht aus der Hüllwand heraus.

JP 2011-163365 A offenbart ein Zahnradgetriebe mit einem Ölkanal, der sich teilweise der Form der Zahnräder anschmiegt.

Der vorliegenden Erfindung liegt die Aufgabe zugrunde, ein Stirnradgetriebe der eingangs genannte Art derart weiter zu entwickeln, dass ein hoher Wirkungsgrad bei geringen Herstellungs- und Wartungskosten erreicht wird, das heißt, dass die Maßnahmen zur Verlustleistungsreduzierung zum einen wirksam und zum anderen kostengünstig sein sollen.

Die erfindungsgemäße Aufgabe wird durch ein Stirnradgetriebe gemäß den unabhängigen Ansprüchen gelöst. In den abhängigen Ansprüchen sind vorteilhafte und besonders zweckmäßige Ausgestaltungen der Erfindung angegeben.

Ein erfindungsgemäßes Stirnradgetriebe weist wenigstens zwei verzahnte Stirnräder auf, deren Verzahnungen in einem kämmenden Eingriff miteinander stehen, wobei die beiden Stirnräder jeweils über einer Drehachse drehbar sind. Das Stirnradgetriebe weist eine Hüllwand auf, welche die beiden Stirnräder in Umfangsrichtung und in Richtung der Drehachsen umschließt, wobei die Hüllwand eine Innenkontur aufweist, welche den Außendurchmessern der Stirnräder derart angepasst ist, dass sich zwischen der Hüllwand und den Stirnrädern zwei ineinander übergehende Ringspalte ergeben, wobei je ein Ringspalt zumindest im Wesentlichen konzentrisch zu je einer Drehachse angeordnet ist.

Gemäß einer ersten erfindungsgemäßen Ausführungsform umschließt die Hüllwand die beiden Stirnräder in Umfangsrichtung nur über einen Teil von deren Umfang, sodass ein Teil des äußeren Umfangs der beiden Stirnräder oder zumindest eines der beiden Stirnräder nach außen aus der Hüllwand herausragt. Dieser nach außen aus der Hüllwand herausragende Teil des Umfangs liegt somit frei gegenüber der Umgebung der Hüllwand, beispielsweise gegenüber einem Innenraum eines Getriebegehäuses des Stirnradgetriebes. Demnach ist keine vollständige Kapselung der Stirnräder wie beim genannten Stand der Technik vorgesehen. Der nach außen aus der Hüllwand herausragende Teil des Umfangs liegt, wenn die beiden Stirnräder nebeneinander positioniert sind, außerhalb einer Projektionsfläche, die durch einen Querschnitt senkrecht zur Drehachse der Stirnräder durch die entlang des äußeren Umfangs der Stirnräder positionierten Teile der Hüllwand gebildet wird. Mit anderen Worten weist die Hüllwand nicht nur eine Öffnung über dem Umfang der Stirnräder auf, durch welche die Stirnräder sozusagen in Sichtverbindung mit der Umgebung der Hüllwand stehen, sondern die Stirnräder ragen tatsächlich aus einer entsprechenden Öffnung der Hüllwand heraus und stehen über diese Öffnung über. Wenn die beiden Stirnräder übereinander positioniert sind, ragt entsprechend das untere Stirnrad nach unten über eine horizontale Ebene hinaus, in welcher die sich nach unten vom oberen zum unteren Stirnrad erstreckende Hüllwand endet.

Der aus der Hüllwand herausragende Teil der beiden Stirnräder oder des einen Stirnrads ist auf der Unterseite der Stirnräder positioniert, das heißt im Betrieb des Stirnradgetriebes in Richtung eines Ölsumpfes, der sich durch die Schwerkraft unten im Stirnradgetriebe ansammelt. Auf ihrer entgegengesetzten oberen Seite werden die Stirnräder hingegen vorteilhaft vollständig von der Hüllwand umschlossen, insbesondere über wenigstens der oberen Hälfte des Umfangs des jeweiligen Stirnrads, wobei die obere Hälfte unten insbesondere durch eine Horizontale abgeschlossen wird, das heißt die Hüllwand endet auf ihrer Unterseite in einer horizontalen Ebene. Wenn die Stirnräder übereinander positioniert sind, wobei insbesondere genau zwei Stirnräder vorgesehen sind, von denen das eine über dem anderen positioniert ist, kann beispielsweise das untere Stirnrad beginnend zumindest im Wesentlichen in Höhe seiner Drehachse oder auch darunter über einen Bogen von wenigstens annähernd wenigstens 90° umschlossen sein und das obere Stirnrad ist dann vorteilhaft durch die Hüllwand um mehr als 180°, insbesondere um im Wesentlichen 270° umschlossen, beginnend neben dem Eingriffsbereich der beiden Verzahnungen und im weiteren Verlauf nach oben über den Scheitel des oberen Stirnrades hinweg auf die gegenüberliegende Seite bis wieder hinunter zumindest im Wesentlichen in Höhe der Drehachse des oberen Stirnrades.

Der nach unten aus der Hüllwand herausragende Teil der Stirnräder, bei Übereinanderpositionierung der Stirnräder der nach unten herausragende Teil des unteren Stirnrades ist vorteilhaft frei oberhalb eines Ölsumpfes im Getriebe positioniert, insbesondere mit Abstand zu dem Ölsumpf beziehungsweise einer unteren Wand des Getriebegehäuses, wobei der Abstand vorteilhaft ein Vielfaches des Abstandes zwischen der Hüllwand und dem umschlossenen Bereich des oder der Stirnräder beträgt.

Die Erfindung ist jedoch auch mit der entsprechenden Maßnahme bei einem Getriebe anwendbar, in dem ein Ölsumpf außerhalb des Getriebegehäuses vorgesehen ist oder auf einen entsprechenden Ölsumpf durch eine andere geeignete Schmierung verzichtet werden kann.

Die beiden Stirnräder sind vorteilhaft in Horizontalrichtung des Stirnradgetriebes mit ihren Drehachsen nebeneinander positioniert, wobei die Drehachsen insbesondere innerhalb einer gemeinsamen horizontalen Ebene verlaufen. Die Ebene ist insbesondere parallel zur Oberfläche eines Ölsumpfes unten im Stirnradgetriebe.

Vorteilhaft umschließt die Hüllwand die beiden Stirnräder vollständig über deren oberen Hälfte und einen Teil der unteren Hälfte darüber hinaus, betrachtet in einem Querschnitt durch eine vertikale Ebene senkrecht zu den Drehachsen der Stirnräder. Die beiden über die obere Hälfte hinausgehenden Teile der Umhüllung können insbesondere an ihrem freien Ende in ihrem Querschnitt verjüngt ausgeführt sein.

Gemäß einer Ausführungsform der Erfindung ist der Spalt beziehungsweise Ringspalt zwischen der Umhüllung und dem Außendurchmesser der Stirnräder am freien Ende der Umhüllung verjüngt ausgeführt. Dies kann an einem freien Ende oder beiden freien Enden der Umhüllung vorgesehen sein. Eine solche Reduzierung des Ringspaltes gegenüber dem verbleibenden Bereich des Ringspaltes bewirkt eine Abdichtung, die einen unerwünschten Austritt und/oder Eintritt von Öl in den Ringspalt verhindert oder reduziert.

Gemäß einer Ausführungsform der Erfindung ist der Bereich des Zahneingriffs der Stirnräder, insbesondere auf der Oberseite der beiden Stirnräder, frei von einer Umhüllung oder es ist ein entsprechendes Fenster in der Umhüllung vorgesehen.

Der ersten erfindungsgemäßen Ausführungsform liegt die Erkenntnis zugrunde, dass nicht nur durch Erzeugen eines Unterdrucks beziehungsweise Vakuums im Bereich der Verzahnungen der umlaufenden Stirnräder eine Verlustleistungsreduzierung bewirkt werden kann, sondern dass sich um die Stirnräder in der Praxis eine dünne Schicht aus schmierstoffarmen, insbesondere schmierölarmen Medium ausbildet, da der Schmierstoff, insbesondere das Öl, durch die Zentrifugalkraft nach außen geschleudert wird. Eine solche Schicht oder Schichtung wird durch die Hüllwand stabilisiert, wobei durch gezieltes Auswählen der Dicke der Ringspalte festgesetzt werden kann, dass außerhalb der Hüllwand ein vergleichsweise ölreicheres Medium vorhanden sein kann, wohingegen innerhalb der Hüllwand, das heißt in den Ringspalten zwischen den Stirnrädern und der Hüllwand, ein ölarmes Medium vorhanden ist. Somit wird, auch ohne vollständige Kapselung beziehungsweise ohne angelegtes Vakuum verhindert, dass schmierstoffreiches Medium an die Stirnräder gelangt, welches beschleunigt werden muss und somit die Leistungsaufnahme der Stirnräder erhöht.

Die erste erfindungsgemäße Lösung schließt nicht aus, dass zusätzlich ein Unterdruck im Innenraum des Getriebegehäuses, welches die Hüllwand umschließt, angelegt wird, das heißt, dass im Innenraum ein niedrigerer Druck als in der Umgebung des Getriebegehäuses herrscht. Ein solcher Unterdruck kann beispielsweise mittels einer externen oder integrierten Vakuumpumpe erzeugt werden, deren Saugseite am Innenraum angeschlossen ist. Bei einem solchen reduzierten Umgebungsdruck der Hüllwand kann die Leistungsaufnahme durch das teilgekapselte Innengehäuse, das heißt mit der erfindungsgemäßen Hüllwand, noch weiter reduziert werden. Auch gegenüber einer Ausführungsform mit besaugtem Innenraum des Getriebegehäuses ohne Kapselung der Stirnräder, das heißt ohne Vorsehen einer Hüllwand, ist die Verlustleistung der erfindungsgemäßen Ausführungsform mit einer teilweisen oder vollständigen Kapselung der Stirnräder, wobei auf letztere nachfolgend noch eingegangen wird, und zusätzlich druckreduziertem Innenraum des Getriebegehäuses verlustleistungsärmer, da nämlich herkömmlich durch die geringere Dichte des Mediums im Getriebegehäuse nur im geringeren Maße eine Schichtung, wie sie oben beschrieben wurde, erfolgt und dadurch das ölreiche Medium die Verzahnungen der Stirnräder leichter erreichen kann. Durch die erfindungsgemäß vorgesehene Hüllwand wird die Schichtung der Medien künstlich eingestellt und verstärkt, auch bei einem Druck im Innenraum des Getriebegehäuses, der unterhalb des Umgebungsdruckes liegt.

Gemäß einer zweiten zur ersten Ausführungsform der Erfindung alternativen Ausführungsform, die jedoch auch mit der ersten Alternative kombiniert werden kann, ist daher ein Stirnradgetriebe mit wenigstens zwei verzahnten Stirnrädern vorgesehen, deren Verzahnungen in einem kämmenden Eingriff miteinander stehen, wobei die beiden Stirnräder jeweils über einer Drehachse drehbar sind. Auch hier ist eine Hüllwand vorgesehen, welche die beiden Stirnräder in Richtung der Drehachsen umschließt, wobei die Hüllwand eine Innenkontur aufweist, welche den Außendurchmessern der Stirnräder derart angepasst ist, dass sich zwischen der Hüllwand und den Stirnrädern zwei ineinander übergehende Ringspalte ergeben, wobei je ein Ringspalt zumindest im Wesentlichen konzentrisch zu je einer Drehachse angeordnet ist. Die Hüllwand kann nun die beiden Stirnräder in Umfangsrichtung gemeinsam vollständig oder auch nur teilweise umschließen, letzteres gemäß der ersten Alternative der Erfindung. In jedem Fall ist gemäß der zweiten Alternative jedoch zusätzlich zu dem Vorsehen der Hüllwand der Innenraum eines Getriebegehäuses, in welchem die Stirnräder zusammen mit der Hüllwand angeordnet sind, mit einem Druck versehen, der gegenüber dem Umgebungsdruck, das heißt dem Druck in der äußeren Umgebung des Stirnradgetriebes außerhalb des Getriebegehäuses, reduziert ist.

Insbesondere ist zwischen dem Getriebegehäuse und einem Teil oder dem gesamten Umfang der Hüllwand ein Abstand vorgesehen, der durch den Innenraum gebildet wird. Im Innenraum ist zumindest im Betrieb des Stirnradgetriebes ein Luft-Schmierstoff-Gemisch, insbesondere ein Luft-Öl-Gemisch vorhanden, dessen Druck durch beispielsweise eine externe oder integrierte Vakuumpumpe reduziert wird.

Gemäß einer vorteilhaften Ausgestaltung der Erfindung mit teilgekapselten Stirnrädern erstreckt sich der aus der Hüllwand herausragende Teil des äußeren Umfangs der beiden Stirnräder über einen Bogen von jeweils 10° bis 180°, insbesondere von 90° bis 180°, die Grenzwerte eingeschlossen oder ausgeschlossen.

Beispielsweise ist der aus der Hüllwand herausragende Teil der Stirnräder auf der Unterseite der Stirnräder positioniert, bezogen auf den bestimmungsgemäßen Gebrauch des Stirnradgetriebes.

Die Ringspalte können beispielsweise eine Dicke von 1 bis 10 mm aufweisen, zumindest in dem Teil, in dem die Innenkontur der Hüllwand und der äußere Durchmesser der Stirnräder äquidistant beziehungsweise konzentrisch zueinander sind.

Besonders vorteilhaft ist an der Hüllwand auf jeder Stirnseite der Stirnräder ein die Stirnseite abdeckender Seitendeckel angeschlossen, wobei der Seitendeckel insbesondere auch den aus der Hüllwand herausragenden Teil des äußeren Umfangs des jeweiligen Stirnrads auf dessen Stirnseite abdeckt. Wenn der herausragende Teil auf der Unterseite der Stirnräder positioniert ist, bedeutet dies, dass sich der oder die Seitendeckel weiter nach unten als die Hüllwand erstreckt/erstrecken.

Gemäß einer Ausführungsform der Erfindung weist jedes Stirnrad wenigstens eine Antriebswelle oder Abtriebswelle auf, die durch wenigstens einen Seitendeckel hindurchgeführt ist.

Gemäß einer Ausführungsform der Erfindung ist in wenigstens einem Seitendeckel oder in beiden Seitendeckeln im Bereich des gegenseitigen Eingriffs der Verzahnungen der beiden Stirnräder eine Öffnung vorgesehen. Diese kann beispielsweise dazu dienen, Kühlöl aus dem von der Hüllwand umschlossenen Bereich der Stirnräder beziehungsweise aus den Ringspalten abzuführen.

Das Kühlöl, allgemein das Kühlmedium für die Stirnräder kann beispielsweise in den Zahneintritt oder bevorzugt Zahnaustritt der miteinander kämmenden Verzahnungen gespritzt werden. Hierfür können dort entsprechende Düsen vorgesehen sein.

Wenn die Hüllwand nach unten geöffnet ist, kann das Kühlöl auch hier leicht aus der Hüllwand abgeführt werden.

Gemäß einer Ausführungsform der Erfindung ist die Hüllwand an wenigstens einem Umfangsende oder an beiden Umfangsenden in Umfangsrichtung der Stirnräder keilförmig verjüngt ausgeführt. Das Ausbilden eines Keils an den Umfangsenden bewirkt, dass die Strömung des Luft-Schmierstoff-Gemisches in Radialrichtung von den Verzahnungen der Stirnräder weggeleitet wird. Somit wird verhindert, dass schmierstoffreiches Medium in den Ringspalt gesogen wird. Die Keile dienen sozusagen als Dichtung, um den Ringspalt gegenüber der Umgebung beziehungsweise gegenüber dem Innenraum des Getriebegehäuses abzudichten. Hierbei gilt zu beachten, dass sich die Stirnräder in der Regel im Bereich ihres von der Hüllwand abgedeckten Umfangs aufeinander zu und im Bereich des von der Hüllwand nicht abgedeckten Umfangs voneinander wegdrehen.

Die Hüllwand kann eine Kühlung aufweisen. Beispielsweise sind Kühlbohrungen zum Durchleiten eines Kühlmediums und/oder oberflächenvergrößernde Rippen auf der Außenseite der Hüllwand vorgesehen und/oder es ist eine Kühlmediumberieselungsvorrichtung vorgesehen, um die Hüllwand von außen zu berieseln.

Gemäß einer besonders vorteilhaften Ausführungsform der Erfindung, wobei diese nachfolgend beschriebene Gestaltung auch unabhängig von den zuvor genannten Maßnahmen, insbesondere auch ohne das Merkmal, dass die Hüllwand die Stirnräder nur über einen Teil von deren Umfang umschließt, wobei der aus der Hüllwand herausragende Teil der Stirnräder insbesondere auf der Unterseite der Stirnräder positioniert ist, ausgeführt werden kann, wird der enge Abstand zwischen der Hüllwand und den Stirnrädern für eine Wärmeabfuhr über die Hüllwand genutzt und die Funktion der Kühlung der Stirnräder von der Funktion der Schmierung der Stirnräder getrennt. So kann beispielsweise eine aktive Kühlung der Hüllwand mit einem Kühlmedium und die Schmierung der Verzahnungen der Stirnräder mit einem Schmiermedium vorgesehen sein, wobei der Kühlmediumvolumenstrom größer als der Schmiermediumvolumenstrom ist, was nicht ausschließt, dass als Kühlmedium und Schmiermedium dasselbe Medium verwendet wird, insbesondere Öl aus einem Ölsumpf des Stirnradgetriebes. Beispielsweise wird ein erster Volumenstrom des Ölsumpfes durch die Hüllwand und/oder über die Hüllwand als Schmiermediumstrom geleitet, und ein zweiter Volumenstrom des Öls wird durch die Verzahnungen geleitet, insbesondere in den Zahneintritt und/oder Zahnaustritt der miteinander kämmenden Verzahnungen gespritzt, um die Schmierung sicherzustellen, wobei der zweite Volumenstrom kleiner als der erste Volumenstrom ist. Beispielsweise beträgt der erste Volumenstrom - Kühlmediumvolumenstrom - wenigstens das Doppelte oder Dreifache, inbesondere das Fünf- bis Zehnfache des zweiten Volumenstroms, das heißt des Schmiermediumvolumenstroms.

In einer Weiterbildung der Erfindung kann vorgesehen sein, als Kühlmedium ein anderes Medium als das Schmiermedium zu verwenden, beispielsweise als Kühlmedium Wasser oder ein Wassergemisch und als Schmiermedium Öl.

Die Dicke der Ringspalte ist vorteilhaft derart gewählt, dass eine radiale Geschwindigkeitskomponente des im Ringspalt strömenden Mediums reduziert wird. Medium, das bereits in Umfangsrichtung beschleunigt wurde, soll durch die Form der Innenkontur der Hüllwand eine möglichst konstante Geschwindigkeit aufweisen. Zugleich sollte die Dicke der Ringspalte nicht zu gering gewählt werden, da mit abnehmender Dicke die Relativgeschwindigkeiten im Medium zunehmen und damit der Verlust ansteigt.

Die Erfindung soll nachfolgend anhand eines Ausführungsbeispiels und den Figuren exemplarisch beschrieben werden.

Es zeigen:
- Figur 1: einen schematischen Axialschnitt durch ein erfindungsgemäß ausgeführtes Stirnradgetriebe mit Teilkapselung;
- Figur 2: eine schräge Draufsicht auf die teilgekapselten Stirnräder aus der Figur 1;
- Figur 3: eine schematische Darstellung einer möglichen Teilkapselung der Stirnräder mit einem diese umschließenden Getriebegehäuses;
- Figur 4: eine alternative Ausführungsform zu der Figur 3, bei welcher die Stirnräder übereinander positioniert sind;
- Figur 5: eine schematische Darstellung mit der Trennung der Kühlung und Schmierung der Stirnräder beziehungsweise von deren Verzahnungen.

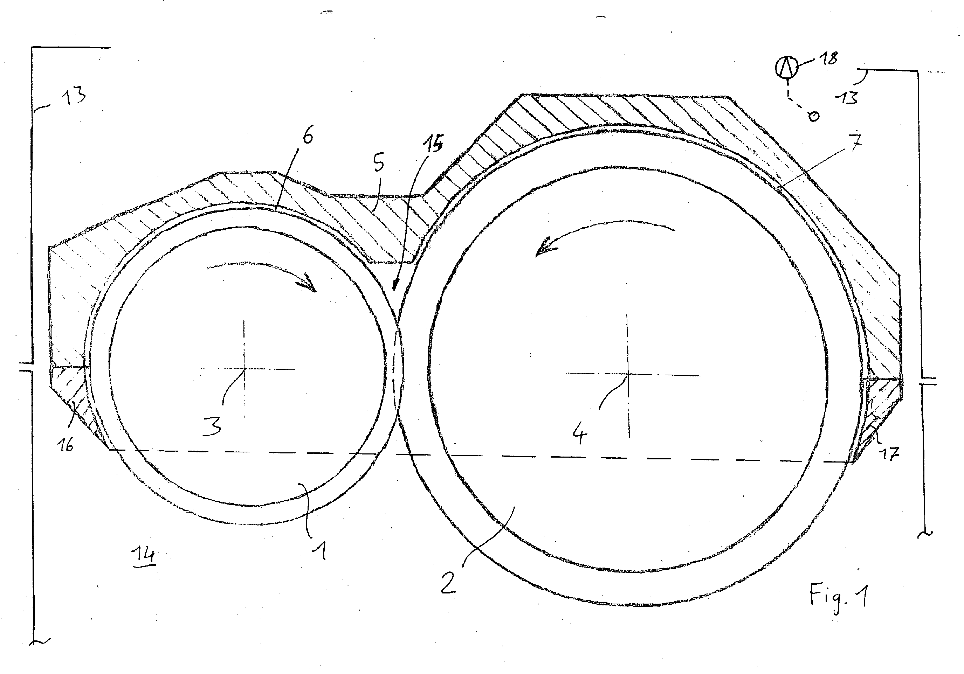

In der Figur 1 ist ein Stirnradgetriebe mit einem ersten Stirnrad 1 und einem zweiten Stirnrad 2 dargestellt, die beispielsweise als schrägverzahnte oder doppelschrägverzahnte Stirnräder ausgeführt sind. Wie man sieht, stehen die Verzahnungen der beiden Stirnräder 1, 2 in einem kämmenden Eingriff miteinander, sodass das erste Stirnrad 1, wenn es über seiner Drehachse 3 umläuft, das zweite Stirnrad 2 über dessen Drehachse 4 antreibt oder umgekehrt. Die Drehrichtung der Stirnräder 1, 2 ist durch die Pfeile angezeigt.

Es ist eine die Stirnräder 1, 2 eng umschließende Hüllwand 5 vorgesehen, wobei sich die Hüllwand 5 jedoch nur über einen Teil des Umfangs der beiden Stirnräder 1, 2 erstreckt, sodass ein Teil des äußeren Umfangs der Stirnräder 1, 2 gegenüber einem Innenraum 14 des hier nur schematisch dargestellten Getriebegehäuses 13 freiliegt. Im gezeigten Ausführungsbeispiel ragt der Teil des äußeren Umfangs der beiden Stirnräder 1, 2 auf der Unterseite der Stirnräder 1, 2 aus der Hüllwand 5 heraus.

Im übrigen Bereich der Umfänge der beiden Stirnräder 1, 2 bildet die Innenkontur der Hüllwand 5 mit den Außendurchmessern der Stirnräder 1, 2 zwei ineinander übergehende Ringspalte 6, 7 aus, die bis auf den Bereich des Eingriffsbereichs 15 der Verzahnungen eine konstante Dicke über dem Umfang der Stirnräder 1, 2 aufweisen.

Im gezeigten Ausführungsbeispiel erstreckt sich der aus der Hüllwand 5 herausragende Teil des äußeren Umfangs der beiden Stirnräder 1, 2 über jeweils einen Bogen von annähernd 180°, wobei die Differenz zu 180° durch zwei Keile 16, 17 an den beiden Umfangsenden der Hüllwand 5 abgedeckt wird, das heißt, dass die Hüllwand 5 an ihren beiden Umfangsenden keilförmig verjüngt ausgeführt ist. Wie man sich aufgrund der eingezeichneten Drehrichtungen der Stirnräder 1, 2 vorstellen kann, bewirkt diese keilförmige Verjüngung ein Umleiten der Strömung in Radialrichtung weg von den Stirnrädern 1, 2 im Bereich des Eintauchens der Stirnräder 1, 2 in die Hüllwand 5.

Mit der gestrichelten Linie und der im Querschnitt gezeigten Hüllwand 5 ist die Projektionsfläche begrenzt, aus welcher die beiden Stirnräder 1, 2 herausragen. Wie man sieht, weist somit die Hüllwand 5 nicht nur einfach unten eine Öffnung auf, durch welche hindurch die Stirnräder 1, 2 von außen ersichtlich sind, sondern die Stirnräder 1, 2 ragen mit ihrem äußeren Umfang aus der Hüllwand 5 heraus.

Innerhalb des Innenraums 14 kann im Getriebegehäuse 13 unten ein Schmierstoffsumpf beziehungsweise Ölsumpf vorgesehen sein, der hier nicht näher dargestellt ist, da er einen entsprechenden Abstand von der Unterseite der Stirnräder 1, 2 aufweist. Ferner kann eine Absaugvorrichtung, das heißt eine Vakuumpumpe, vorgesehen sein, die mit ihrer Saugseite an dem Innenraum 14 angeschlossen ist, um diese zu besaugen. Eine solche Vakuumpumpe ist nur schematisch dargestellt und mit dem Bezugszeichen 18 bezeichnet. Die Erfindung kann jedoch auch ohne eine solche Vakuumpumpe ausgeführt werden.

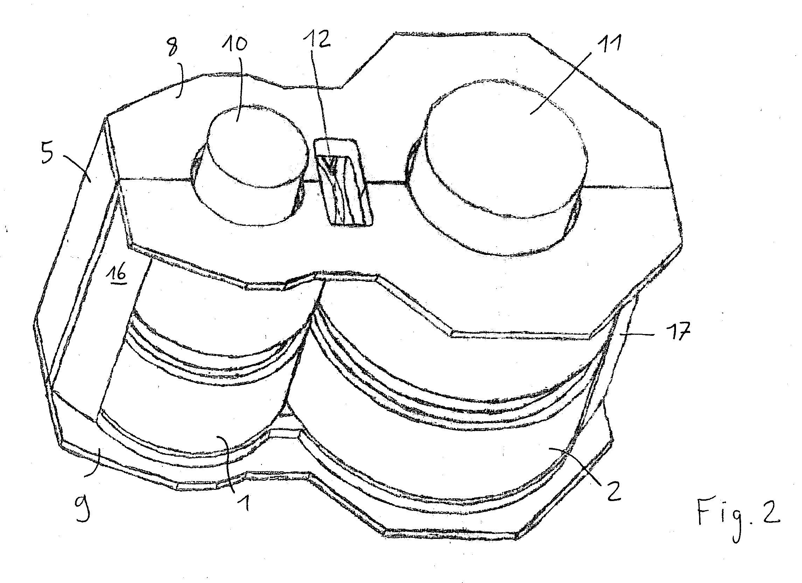

In der Figur 2 sind die beiden seitlich an der Hüllwand 5 angeschlossenen Seitendeckel 8, 9 dargestellt. Wie man sieht, decken diese auch den aus der Hüllwand 5 nach unten herausragenden Teil des äußeren Umfangs der Stirnräder 1, 2 ab.

Das erste Stirnrad 1 weist eine Antriebswelle 10 und das zweite Stirnrad 2 weist eine Abtriebswelle 11 auf. Beide Wellen 10, 11 sind durch die Seitendeckel 8 hindurchgeführt. Bein einem zweiten Stirnrad 2, das das erste Stirnrad 1 antreibt, wären die Wellen 10, 11 entsprechend vertauscht.

Ferner ist in dem Seitendeckel 8 und insbesondere auch in dem Seitendeckel 9 im Bereich des gegenseitigen Eingriffs der Verzahnungen der beiden Stirnräder 1, 2 eine Öffnung 12 vorgesehen. Diese dient dem Abführen von Kühlmedium.

Aus der Figur 2 erkennt man ferner, dass im gezeigten Ausführungsbeispiel jedes Stirnrad 1, 2 zwei Verzahnungen aufweist, die in Axialrichtung nebeneinander und insbesondere mit Abstand zueinander positioniert sind, um eine Doppelverzahnung, insbesondere eine Doppelschrägverzahnung auszubilden.

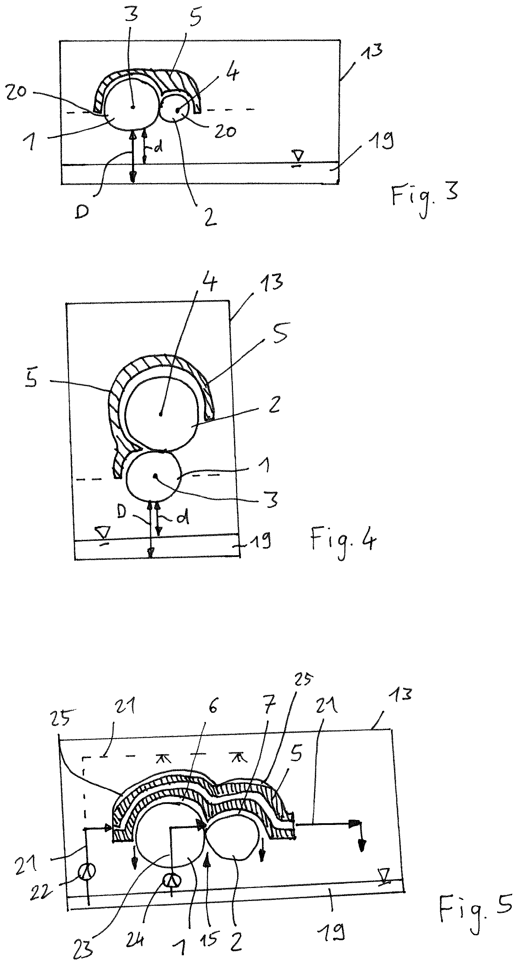

In der Figur 3 ist nochmals schematisch eine Ausführungsform eines erfindungsgemäßen Stirnradgetriebes gemäß einer bevorzugten Ausgestaltung gezeigt. Hier umschließt die Hüllwand 5 jeweils die obere Hälfte der beiden Stirnräder 1, 2 und endet somit in einer durch die Drehachsen 4, 5 verlaufenden horizontalen Ebene, siehe die gestrichelte Linie.

Unten im Getriebegehäuse 13, welches die beiden Stirnräder 1, 2 und die Hüllwand 5 umschließt, ist der Ölsumpf 19 schematisch dargestellt. Man erkennt, dass die aus der Hüllwand 5 herausragenden Teile 20 der Stirnräder 1, 2, das heißt die Teile 20, die unterhalb der durch die gestrichelte Linie gezeigten Ebene, in welcher die Hüllwand 5 endet, positioniert sind, einen Abstand D zum Getriebegehäuse 13 und auch einen Abstand d zum Ölsumpf 19 aufweisen, wobei die beiden Stirnräder 1, 2 in diesem Bereich frei gegenüber dem Ölsumpf 19 positioniert sind, insbesondere ohne zwischengeschaltete, die Stirnräder 1, 2 abdeckende Bauteile. Somit kann Schmieröl leicht aus den Verzahnungen der Stirnräder 1, 2 in den Ölsumpf 19 abgeführt werden, insbesondere durch freies Abspritzen.

In der Figur 4 ist eine alternative Ausführungsform in einer ähnlichen Darstellung wie jene der Figur 3 gezeigt. Abweichend sind hier die Stirnräder 1, 2 übereinander positioniert. Bezüglich der dargestellten Bauteile wird auf die Figur 3 und die entsprechenden Bezugszeichen verwiesen.

In der Figur 4 ist das obere Stirnrd, hier das zweite Stirnrad 2, zu drei viertel, das heißt annähernd über 270° von der Hüllwand 5 umschlossen, das untere Stirnrad, hier das erste Stirnrad 1, ist über einem Viertel seines Umfangs, das heißt über annähernd 90° von der Hüllwand 5 umschlossen. Demnach ragt die untere Hälfte des ersten Stirnrades 1 aus der Hüllwand 5 nach unten heraus, siehe auch hier wieder die gestrichelte Linie, welche die Ebene zeigt, in welcher die Hüllwand 5 von oben endet. Auch die Abstände d, D des unteren Stirnrades 1 zum Ölsumpf 19 beziehungsweise dem Getriebegehäuse 13 betragen, wie bei der Ausführungsform gemäß der Figur 3, wiederum ein Vielfaches des Abstandes zwischen den Stirnrädern 1, 2 und der Hüllwand 5 im Bereich der Umschließung beziehungsweise Kapselung.

In der Figur 5 ist ein Aspekt der vorliegenden Erfindung dargestellt, nämlich die Trennung der Kühlung der Stirnräder 1, 2 von der Schmierung der Stirnräder 1, 2. So wird ein erster Ölvolumenstrom zur Kühlung der Stirnräder 1, 2 durch die Hüllwand 5 geleitet. Dieser erste Ölvolumenstrom ist mit 21 bezeichnet. Schematisch ist zur Förderung dieses ersten Ölvolumenstroms 21 eine erste Ölpumpe 22 angedeutet, welche das Öl aus dem Ölsumpf 19 fördert. Dies ist jedoch nicht zwingend notwendig, so könnte auch ein anderes Kühlmedium oder eine andere Förderung vorgesehen sein. Zusätzlich oder alternativ kann, wie durch die gestrichelte Linie angedeutet ist, die Hüllwand 5 auch durch Berieselung mit dem ersten Ölvolumenstrom 21 gekühlt werden.

Zur Schmierung der Stirnräder 1, 2 wird ein zweiter Ölvolumenstrom 23 in die Verzahnungen der Stirnräder 1, 2 geleitet, vorteilhaft in den Eingriffsbereich 15 der Verzahnungen, beispielsweise durch eine oder mehrere Öffnungen 12, wie sie in der Figur 2 dargestellt ist. Dieser zweite Ölvolumenstrom 23 wird beispielsweise mittels einer zweiten Ölpumpe 24 aus dem Ölsumpf 19 gefördert. Auch hier kommt jedoch auch eine andere Förderung oder eine andere Quelle in Betracht.

Der erste Ölvolumenstrom 21 und der zweite Ölvolumenstrom 23 können auch mittels einer gemeinsamen Ölpumpe gefördert werden, wobei jedoch in allen Fällen vorteilhaft der erste Ölvolumenstrom 21 größer als der zweite Ölvolumenstrom 23 ist, insbesondere ein Vielfaches hiervon beträgt.

Der zweite Ölvolumenstrom 23 kann vorteilhaft frei von den Stirnrädern 1, 2 abspritzen, während der erste Ölvolumenstrom 21 in der Regel aus wenigstens einer entsprechenden Öffnung aus der Hüllwand 5 austritt oder, bei einer Berieselung der Hüllwand 5, von der Hüllwand 5 abläuft beziehungsweise abtropft.

Durch die aktive Kühlung der Hüllwand 5 können die Stirnräder 1, 2 im Unterschied zu einer direkten Kühlung mittelbar durch Wärmeübertragung über die Ringspalte 6, 7 in die Hüllwand 5 gekühlt werden. Dies ermöglicht, dass ein vergleichsweise kleiner Schmierölvolumenstrom, hier zweiter Ölvolumenstrom 23, durch die Ringspalte 6, 7 und/oder den Eingriffsbereich 15 der Verzahnung gefördert wird, was die Verluste reduziert.

Im gezeigten Ausführungsbeispiel ist ferner schematisch eine Kühlung der Hüllwand 5 durch Kühlrippen 25 außen auf der Hüllwand 5 gezeigt.

Gemäß einer Ausführungsform der Erfindung könnte es ausreichend sein, die Hüllwand 5 nur mittels der wenigstens einen Kühlrippe 25 zu kühlen und trotzdem über die Hüllwand 5 einen größeren Wärmestrom abzuführen als über den durch die beziehungsweise entlang der Verzahnung, insbesondere durch die Ringspalte 6, 7 geleiteten Kühlmediumstrom, hier den zweiten Ölvolumenstrom 23.

## Patentansprüche

1. Stirnradgetriebe mit wenigstens zwei verzahnten Stirnrädern (1, 2), deren Verzahnungen in einem kämmenden Eingriff miteinander stehen und die jeweils über einer Drehachse (3, 4) drehbar sind;
1.1 mit einer Hüllwand (5), welche die beide Stirnräder (1, 2) in Umfangsrichtung und in Richtung der Drehachsen (3, 4) umschließt; wobei
1.2 die Hüllwand (5) eine Innenkontur **aufweist,** welche den Außendurchmessern der Stirnräder (1, 2) derart angepasst ist, dass sich zwischen der Hüllwand (5) und den Stirnrädern (1, 2) zwei ineinander übergehende Ringspalte (6, 7) ergeben, wobei je ein Ringspalt (6, 7) zumindest im Wesentlichen konzentrisch zu je einer Drehachse (3, 4) angeordnet ist; wobei
1.3 die Hüllwand (5) die beiden Stirnräder (1, 2) in Umfangsrichtung nur über einen Teil von deren Umfang umschließt, sodass ein Teil des äußeren Umfangs der beiden Stirnräder (1, 2) oder zumindest eines der beiden Stirnräder (1, 2) nach außen aus der Hüllwand (5) herausragt;
der aus der Hüllwand (5) herausragende Teil beider Stirnräder (1, 2) oder des einen Stirnrads (1, 2) ist auf der Unterseite der Stirnräder (1, 2) positioniert;
**dadurch gekennzeichnet,**
**dass** die Ringspalte (6, 7) eine Dicke von 1 bis 10 mm aufweisen.

2. Stirnradgetriebe gemäß Anspruch 1, **dadurch gekennzeichnet, dass** sich der aus der Hüllwand (5) herausragende Teil des äußeren Umfangs der beiden Stirnräder (1, 2) über einen Bogen von jeweils 10° bis 180°, insbesondere von 90° bis 180° erstreckt.

3. Stirnradgetriebe gemäß einem der Ansprüche 1 oder 2, **dadurch gekennzeichnet, dass** das Stirnradgetriebe ein Getriebegehäuse (13) aufweist, das einen mit einem Luft-Schmierstoff-Gemisch befüllten Innenraum (14) aufweist, und die Stirnräder (1, 2) mit der Hüllwand (5) in dem Innenraum (14) positioniert sind, insbesondere mit Abstand zu der Hüllwand (5) über einem Teil oder dem gesamten Umfang der Hüllwand (5).

4. Stirnradgetriebe gemäß einem der Ansprüche 1 bis 3, **dadurch gekennzeichnet, dass** an der Hüllwand (5) auf jeder Stirnseite der Stirnräder (1, 2) ein die Stirnseite abdeckender Seitendeckel (8, 9) angeschlossen ist, der insbesondere auch den aus der Hüllwand (5) herausragenden Teil des äußeren Umfangs des jeweiligen Stirnrads (1,2) auf dessen Stirnseite abdeckt.

5. Stirnradgetriebe gemäß Anspruch 4, **dadurch gekennzeichnet, dass** jedes Stirnrad (1, 2) wenigstens eine Antriebswelle (10) oder Abtriebswelle (11) aufweist, die durch wenigstens einen Seitendeckel (8, 9) hindurchgeführt ist.

6. Stirnradgetriebe gemäß einem der Ansprüche 4 oder 5, **dadurch gekennzeichnet, dass** wenigstens in einem Seitendeckel (8, 9) oder in beiden Seitendeckeln (8, 9) im Bereich des gegenseitigen Eingriffs der Verzahnungen der beiden Stirnräder (1, 2) eine Öffnung (12) vorgesehen ist.

7. Stirnradgetriebe gemäß einem der Ansprüche 1 bis 6, **dadurch gekennzeichnet, dass** die Hüllwand (5) an wenigstens einem Umfangsende oder an beiden Umfangsenden in Umfangsrichtung der Stirnräder (1, 2) keilförmig verjüngt ausgeführt ist und/oder mit einem geringeren Abstand gegenüber der Verzahnung des jeweiligen Stirnrades (1, 2) angeordnet ist als im übrigen Bereich des von der Hüllwand (5) überdeckten Umfangs.

8. Stirnradgetriebe gemäß einem der Ansprüche 1 bis 7, **dadurch gekennzeichnet, dass** die Hüllwand (5) eine Kühlung aufweist, insbesondere Kühlbohrungen zum Durchleiten eines Kühlmediums, oberflächenvergrößernde Rippen auf der Außenseite und/oder eine Kühlmediumberieselungsvorrichtung.

9. Stirnradgetriebe gemäß einem der Ansprüche 1 bis 8, **dadurch gekennzeichnet, dass** der Innenraum (14) einen gegenüber der äußeren Umgebung des Stirnradgetriebes reduzierten Druck aufweist.

10. Stirnradgetriebe gemäß Anspruch 9, **dadurch gekennzeichnet, dass** eine Vakuumpumpe (18) vorgesehen ist, die mit ihrer Saugseite am Innenraum (14) diesen besaugend angeschlossen ist.

11. Stirnradgetriebe gemäß einem der Ansprüche 1 bis 10, **dadurch gekennzeichnet, dass** die beiden Stirnräder (1, 2) mit ihren Drehachsen (3, 4) nebeneinander positioniert sind, insbesondere mit den beiden Drehachsen (3, 4) in einer gemeinsamen horizontalen Ebene.

12. Stirnradgetriebe gemäß einem der Ansprüche 8 bis 11, **dadurch gekennzeichnet, dass** mittels der Kühlung der Hüllwand (5) ein größerer Wärmestrom aus den Stirnrädern (1, 2) und/oder deren Verzahnung abgeführt wird, als mit einem Schmiermediumstrom, insbesondere Schmierölstrom, mit welchem der kämmende Eingriff der Verzahnungen geschmiert wird und der insbesondere durch die Ringspalte (6, 7) geleitet wird.

13. Stirnradgetriebe gemäß Anspruch 12, **dadurch gekennzeichnet, dass** durch die Hüllwand (5) und/oder über die Hüllwand (5) ein erster Ölvolumenstrom (21) zur Kühlung der Hüllwand (5) geleitet wird, und durch die Verzahnungen der Stirnräder (1, 2), insbesondere durch die Ringspalte (6, 7) ein zweiter Ölvolumenstrom (23) geleitet wird, wobei der erste Ölvolumenstrom (21) größer als der zweite Ölvolumenstrom (23) ist, insbesondere ein Vielfaches desselben beträgt.

14. Stirnradgetriebe gemäß Anspruch 13, **dadurch gekennzeichnet, dass** der erste Ölvolumenstrom (21) und der zweite Ölvolumenstrom (23) aus einem Ölsumpf (19) des Stirnradgetriebes gefördert und in diesen zurückgeleitet werden, wobei der Ölsumpf (19) innerhalb oder außerhalb eines Getriebegehäuses (13) positioniert ist, das die Stirnräder (1, 2) mit der Hüllwand (5) umschließt.
